# EUROPÄISCHE PATENTSCHRIFT

(11) **EP 2 432 261 B1**
(45) Veröffentlichungstag und Bekanntmachung des Hinweises auf die Patenterteilung: **04.03.2015**
(21) Anmeldenummer: 11178589.5
(22) Anmeldetag: 24.08.2011
(51) Int. Cl.: H04K 3/00, H04W 8/24, H04W 48/04

(54) **Verfahren zum Deaktivieren von Mobilstationen**
Method for deactivating mobile stations
Procédé de désactivation de stations mobiles

(30) Priorität: 20.09.2010 AT 15612010
(43) Veröffentlichungstag der Anmeldung: 21.03.2012
(73) Patentinhaber: Siemens Convergence Creators GmbH & Co. KG, 21079 Hamburg (DE)
(72) Erfinder: Wolff, Florian, 22453 Hamburg (DE); Von der Heide, Stefan, 22846 Norderstedt (DE)
(74) Vertreter: Maier, Daniel Oliver

(56) Entgegenhaltungen:
- DE-A1- 19 920 153
- DE-A1-102005 034 896
- DE-A1-102006 036 082
- MITSUBISHI ELECTRIC: "Dynamic Setup of HNBs for Energy Savings and Interference Reduction", 3GPP DRAFT; R3-081949 (DYNAMIC SETUP HNBS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. RAN WG3, Nr. Jeju Island; 20080813, 13. August 2008 (2008-08-13), XP050165010, [gefunden am 2008-08-13]
- IMRAN ASHRAF ET AL: "Improving Energy Efficiency of Femtocell Base Stations Via User Activity Detection", WIRELESS COMMUNICATIONS AND NETWORKING CONFERENCE (WCNC), 2010 IEEE, IEEE, PISCATAWAY, NJ, USA, 18. April 2010 (2010-04-18), Seiten 1-5, XP031706720, ISBN: 978-1-4244-6396-1

## Beschreibung

### Technisches Gebiet

Die vorliegende Erfindung betrifft Verfahren zum Deaktivieren von Mobilstationen, welche in einem Funkkommunikationssystem wie z.B. einem Mobilfunknetz eingebucht sind. Dabei weist das Funkkommunikationssystem zumindest ein erstes Netzelement auf, welches eine Sende-Empfangseinrichtung für die Mobilstationen bildet. Zusätzlich ist ein zweites Netzelement vorgesehen, welches für ein netzseitiges Deaktivieren von Mobilstationen eingerichtet ist.

### Stand der Technik

Eine Mobilstation wie z.B. ein Teilnehmerendgerät, Mobiltelefon, Smartphones, tragbare Computer mit Anbindung an Funkkommunikationssysteme, welches in einer so genannten Funkzelle eines Funkkommunikationssystems (z.B. Mobilfunknetz) eingebucht ist, tauscht mittels Funkwellen laufend Informationen mit einer ortsfesten Basisstation (z.B. Base Transceiver Station (BTS), Node B, etc.) des Funkkommunikationssystem aus. In Mobilfunknetzen nach dem Standard des Global Systems for Mobile Communication (GSM) oder nach Standard des Universal Mobile Telecommunication Systems (UMTS) kann dieser Informationsaustausch beispielsweise durch einen Anruf oder mittels Daten wie z.B. einer Kurznachricht bzw. einem Short Message Service (SMS), etc. geschehen oder durch einen so genannten Location Update.

Mit dem Location Update wird in der Mobilfunktechnologie üblicherweise die Summe der technischen Schritte bezeichnet, welche für einen Zugang einer Mobilstation zu einem fremden Netzwerk oder bei einem Standortwechsel zu einer neuen Funkzelle im aktuellen Netzwerk notwendig sind. Mit dem Location Update wird folglich das Netzwerk bzw. die Netzwerkkomponenten für den neuen Standort (location) des mobilen Endgerätes aktualisiert und in einer zentralen Komponente wie z.B. einem Home Location Register (HLR) hinterlegt, um eine Erreichbarkeit der jeweiligen Mobilstation zu gewährleisten. Befinden sich im Sendebereich der Mobilstation andere elektronische Geräte, so können in diesen Geräten durch die Funkwellen Störungen verursacht werden. Aus diesem Grund ist beispielsweise in Krankenhäusern, Flugzeugen, insbesondere während Start und Landung, etc. die Nutzung von Mobilstationen untersagt. Vor allem in Flugzeugen wird befürchtet, dass die von private, funkbasierte Kommunikationseinrichtungen verursachten Funkwellen die Avionik des Flugzeugs stören können. Daher ist die Nutzung dieser Geräte heutzutage aus Sicherheitsgründen überhaupt nicht zugelassen. In gewissen Bereichen wie z.B. in einem Kino oder Theater, etc. ist ebenfalls die Nutzung von Mobilstationen, insbesondere Mobiltelefonen, unerwünscht, da diese beispielsweise bei eingehenden Anrufen eine Vorstellung bzw. die Besucher stören können.

Andererseits ist heutzutage die Verwendung von mobilen Kommunikationseinrichtungen sehr weit verbreitet. Es besteht damit zunehmend der Bedarf, private Kommunikationseinrichtungen wie z.B. Mobiltelefone, Laptops mit Funkverbindung, etc. möglichst einfach und uneingeschränkt - beispielsweise auch während einer Flugreise zu nutzen. Häufig wird von den Nutzern aber auch vergessen, ihre privaten Kommunikationseinrichtungen z.B. im Kino, im Theater, etc. lautlos zu stellen oder abzuschalten.

Häufig wird in den oben erwähnten Bereichen konsequent daran erinnert, mobile Kommunikationseinrichtungen auszuschalten, um Störungen zu verhindern. Dazu ist aber eine Kooperation der Nutzer oder eine manuelle Kontrolle notwendig.

Aus der Schrift EP 1961255 ist ein Verfahren zum Deaktivieren von Mobilstationen bekannt. Bei diesem Verfahren ist im Funknetzzugang eine Einrichtung integriert, welche Anzahl und Kennung der Mobilstationen registriert, die über diesen Funknetzzugang (z.B. Basisstation, Node B) in der zugehörigen Funkzelle eingebucht sind. Ausgelöst von einem externen Ereignis (z.B. Flugzeugstart, Beginn des Landanflugs, Vorstellungsbeginn im Kino und/oder Theater, etc.) können dann eingebuchte Mobilstation über spezielle Sicherheitsoder Deaktivierungsnachrichten deaktiviert werden. Allerdings weist das in der Schrift EP 1961255 offenbarte Verfahren den Nachteil auf, dass nur Mobilstationen inaktiv geschaltet werden können, die über einen mit einer entsprechend ausgestattenden Funknetzzugang eingebucht sind. Mobilstationen, welche in anderen Funkzellen, die ebenfalls vom jeweiligen Standort erreichbar sind, eingebucht sind, können auf diese Weise nicht deaktiviert werden, und verursachen so weiterhin störende Funkwellen bzw. eventuelle Störgeräusche.

Weiterer Stand der Technik ist DE 10 2006 036 082.

### Darstellung der Erfindung

Der Erfindung liegt daher die Aufgabe zugrunde, ein Verfahren zum Deaktivieren von Mobilstationen anzugeben, durch welches auf einfache Weise an einem Standort bzw. in einem Bereich eine Störung durch eine in einer beliebigen Funkzelle eingebuchte mobile Kommunikationseinrichtung automatisch verhindert wird.

Das erfindungsgemäße Verfahren ist in Anspruch 1 definiert.

Die Lösung dieser Aufgabe erfolgt, durch ein Verfahren der eingangs angegebenen Art, wobei Verbindungsaufnahmen der Mobilstationen zum ersten Netzelement überwacht werden. Dann werden bei einer Verbindungsaufnahme einer der Mobilstationen mit dem ersten Netzelement das zweite Netzelement sowie ein Störsender aktiviert. Durch den Störsender, von welchem ein so genanntes Jamming-Signal ausgesandt wird, wird eine Kommunikation dieser Mobilstation zum zweiten Netzelement umgeleitet und dann die Mobilstation vom zweiten Netzelement deaktiviert.

Der Hauptaspekt der Erfindung besteht darin, dass durch das erfindungsgemäße Verfahren Mobilstationen wie z.B. Mobiltelefone oder andere mobile Kommunikationsgeräte in bestimmten Bereichen (z.B. Flugzeugen, Krankenhäusern, Theater, etc.) auf einfache Weise automatisch deaktiviert werden können. Dabei kann die Mobilstation in einer beliebigen, im jeweiligen Bereich wirksamen Funkzelle eingebucht sein, da durch den Störsender jede Kommunikation einer Mobilstation (z.B. Location Update, Übertragung von Daten, Anruf, etc.) auf das zweite Netzelement umgeleitet wird, welche z.B. als Basisstation, insbesondere Picozelle, ausgestaltet sein kann und für ein netzseitiges Deaktivieren von Mobilstationen eingerichtet ist. Dazu kann beispielsweise das in der Schrift EP 1961255 beschriebene Verfahren eingesetzt werden. Auf diese wirksame Weise werden sowohl Störungen durch Funkwellen der Mobilstation als auch akustische Störungen durch Mobilstationen verhindert werden. Mobiltelefone sowie mobile Kommunikationseinrichtungen können damit zu bestimmten bzw. ungefährlichen Zeiten genutzt werden und auf einfache Weise deaktiviert werden, wenn es notwendig ist.

Es ist vorteilhaft, wenn für ein Überwachen der Verbindungsaufnahme der Mobilstationen mit dem Funkkommunikationssystem ein Detektor eingesetzt wird. Vom Detektor werden auf einfache Weise durch Scannen an einem Installationsort bzw. in einem bestimmten Bereich wie z.B. in einem Flugzeug, insbesondere am Boden oder bei der Landung, in einem Krankenhaus, in einem Gefahrenbereich, etc. vorhandene Funkkommunikationssysteme festgestellt. Daraus wird dann eine Liste von zu überwachende Frequenzen für mögliche Verbindungsaufnahmen der Mobilstationen abgeleitet. Damit können auf vorteilhafte Weise mehrere im zu überwachenden Bereich vorhandene Funkzellen bzw. im zu überwachenden Bereich aktive Funkkommunikationssystem wie beispielsweise Mobilfunknetze verschiedener Betreiber von einem Detektor überwacht werden. Dadurch kann das erfindungsgemäße Verfahren ohne großen Aufwand und relativ kostengünstig in verschiedenen, zu überwachenden Bereichen eingesetzt werden. Es ist günstig, wenn vom zweiten Netzelement eine Netzkennung des ersten Netzelements in am Installationsort vorhandenen bzw. vom Detektor festgestellten Funkkommunikationssystemen nachgebildet wird. Damit können einerseits Mobilstationen, welche bei verschiedenen Funkkommunikationssystemen (z.B. Mobilfunknetzen, etc.) registriert sind, durch das erfindungsgemäße Verfahren auf einfache Weise inaktiv geschaltet werden. Andererseits braucht für die Deaktivierung verschiedener Mobilstationen bzw. von Mobilstationen aus verschiedenen Netze nur ein zweites Netzelement mit Deaktivierungsfunktionalität an einem Standort bzw. in einem zu überwachenden Bereich (z.B. Flugzeug, Theater, Krankenhaus, etc.) installiert werden.

Hierbei empfiehlt sich, wenn vom Störsender ein breitbandiges Rauschsignal derart ausgesendet wird, dass von den Mobilstationen bei der Verbindungsaufnahme nur das zweite Netzelement gefunden wird. Durch das Rauschsignal bzw. das so genannte Jamming-Signal wird von einer Mobilstation eine Frequenz zur Verbindungsaufnahme mit dem zugehörigen Funkkommunikationssystem verloren und die Frequenz zur Verbindungsaufnahme mit dem zweiten Netzelement wesentlich besser empfangen. Damit wird auf einfache Weise die Kontaktaufnahme der Mobilstation zum zweiten Netzelement umgelenkt und dort erkannt, dass die entsprechende Mobilstation aktiv ist. Das zweite Netzelement kann dann diese Mobilstation idealer Weise netzseitig deaktivieren.

In einer bevorzugten Ausführungsvariante des erfindungsgemäßen Verfahrens werden beim Deaktivieren einer der Mobilstationen eine Identifikation dieser Mobilstation und/oder eine zugehörige Teilnehmer-Identifikation in einem Protokoll gespeichert. Dies weist den Vorteil auf, dass damit dem zweiten Netzelement bzw. dem von aus dort ablaufenden Deaktivierungsverfahren über die Identifikation - die so genannte International Mobile Equipment Identity (IMEI) - die entsprechende Mobilstation und/oder über die Teilnehmer-Identifikation - die so genannte International Mobile Subscriber Identity (IMSI) - der jeweilige Teilnehmer bzw. eine in die jeweilige Mobilstation eingelegte SIM- oder USIM-Karte bekannt sind.

Idealerweise werden nach erfolgreicher Deaktivierung einer der Mobilstation am Standort bzw. im definierten Bereich das zweite Netzelement und der Störsender ausgeschaltet. Dadurch können auf einfache Weise weitere im definierten Bereich befindliche aktive Mobilstationen erkannt und deaktiviert werden. Auch aktive Mobilstationen, welche sich in den definierten Bereich bewegen, werden dadurch sofort bei der Verbindungsaufnahme mit dem zugehörigen Funkkommunikationssystem erkannt.

Es ist günstig, wenn der Störsender in das zweite Netzelement integriert ist. Damit können beide Elemente auf einfache Weise ein- und ausgeschaltet werden. Außerdem gestaltet sich die Installation, insbesondere bei engen, zu überwachenden Bereichen wie z.B. dem Innenraum eines Flugzeugs, kostengünstiger und einfacher.

Eine zweckmäßige Ausgestaltung der Erfindung sieht vor, dass das zweite Netzelement, der Störsender und der Detektor als vom Funkkommunikationssystem unabhängige Komponenten ausgeführt werden. Dadurch können diese Komponenten - zweites Netzelement, Störsender und Detektor - idealer Weise flexibel (d.h. an beliebigen Standorten und für verschiedene bzw. mehrere Funkkommunikationssysteme) eingesetzt und vor allem ohne große Rüstzeiten in Betrieb genommen werden.

### Kurzbeschreibung der Zeichnung

Die Erfindung wird nachfolgend in beispielhafter Weise anhand der beigefügten Figur erläutert. Es zeigt:

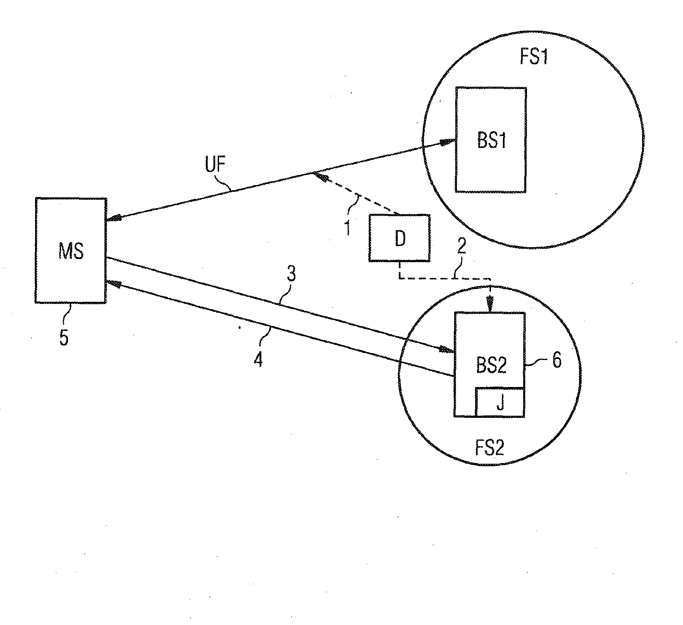

- Figur 1: schematisch einen beispielhaften Ablauf des erfindungsgemäßen Verfahrens zum Deaktivieren von Mobilstationen

### Ausführung der Erfindung

In der Figur 1 ist schematisch und beispielhaft ein Ablauf des erfindungsgemäßen Verfahrens dargestellt. Figur 1 zeigt eine beispielhafte Mobilstation MS, welche über einen Funknetzzugang bzw. über ein erstes Netzelement BS1 in eine Funkzelle eines beispielhaften Funkkommunikationssystem FS1 wie z.B. einem Mobilfunknetz nach dem GSM- und/oder UMTS-Standard eingebucht ist. Das erste Netzelement BS1 kann dabei z.B. als Basisstation für ein Mobilfunknetz nach dem GSM-Standard - als so genannte Base Transceiver Station (BTS) - oder als Basisstation für ein Mobilfunknetz nach dem UMTS-Standard - als so genannter Node B - ausgeführt sein.

Das Funkkommunikationssystem FS1 gemäß der Erfindung kann neben einem beliebigen Mobilfunknetz wie z.B. nach dem bereits erwähnten GSM Standard oder einem Dienste integrierenden Netz wie z.B. dem bereits angeführten Mobilfunknetz gemäß dem UMTS-Standard auch ein System der vierten Generation sein. Hervorgehoben sei auch, dass unter einem Funkkommunikationssystem auch leitungsungebundene lokale Netze, wie beispielsweise WLAN (Wire Less Lan gemäß dem Standard IEEE 802.11) sowie Breitbandnetze mit drahtlosem Zugang (beispielsweise nach dem Standard IEEE 802.16) und ähnliche Netze verstanden werden können.

Über eine Funkverbindung UF wird von der Mobilstation MS mittels Funkwellen Kontakt zum Funkkommunikationssystem FS1 über das erste Netzelement BS1 aufgenommen. Dies geschieht beispielsweise im Rahmen eines so genannten periodischen Location Updates, welcher eine Summe von technischen Schritten umfasst, die für einen Zugang der Mobilstation MS zu einem neuen bzw. fremden Funkkommunikationssystem oder bei einem Standortwechsel - d.h. Einbuchung in eine neue Funkzelle - in einem aktuellen Funkkommunikationssystem FS1 notwendig sind. Weiters wird von der Mobilstation MS auch bei einer Übertragung von Daten oder einer SMS oder bei einem Anruf eine Verbindung mittels Funkwellen zum ersten Netzelement BS1 bzw. zum aktuellen Funkkommunikationssystem FS1 hergestellt.

In einem Bereich bzw. an einem Standort, an welchem eine Störung durch Funkwellen von Mobilstationen MS z.B. aus Sicherheitsgründen und/oder akustische Störungen durch Mobilstationen MS unterbunden werden sollen, kann ein zweites Netzelement BS2 sowie eine Detektor D installiert werden. Sowohl das zweite Netzelement BS2 als auch der Detektor D sind dabei als von anderen Funkkommunikationssystemen FS1 unabhängige Komponenten ausgeführt und daher flexibel an beliebigen Installationsorten (z.B. Flugzeug, Theater, Krankenhaus, etc.) einsetzbar. Das zweite Netzelement BS2 weist zusätzlich einen integrierten Störsender J, einen so genannten Jammer, auf, welche auch als externe Einheit ausgeführt sein kann. Außerdem ist das zweite Netzelement BS2 für ein netzseitiges Deaktivieren von Mobilstationen - beispielsweise mittels eines in der Schrift EP 1961255 beschriebenen, technischen Verfahrens - eingerichtet. Das zweite Netzelement BS2 kann dabei beispielsweise als spezielle Basisstation ausgeführt sein.

Ist nun in einem bestimmten Bereich (z.B. Flugzeug, Krankenhaus, Theater, etc.) die Nutzung einer Mobilstation MS unerwünscht, so kann z.B. getriggert durch bestimmte Ereignisse wie z.B. Flugzeugstart, Beginn eines Landanflugs, Beginn einer Vorstellung oder auch nur durch Eintreten einer aktiven Mobilstation MS in diesen Bereich, das erfindungsgemäße Verfahren gestartet werden.

In einem ersten Verfahrensschritt 1 wird vom Detektor D mittels Scannen festgestellt, welche Funkkommunikationssysteme FS1 am Installationsort vorhanden sind. Dabei werden von Detektor D z.B. bei Mobilfunknetzen nach GSM- bzw. UMTS-Standard zum Erkennen des Funkkommunikationssystems FS1 so genannte Downlink-Frequenzen gescannt. Bei einem GSM-Netz wird dabei z.B. die so genannte Broadcast Controll Channel (BCCH)-Information ausgewertet. Dadurch kann vom Detektor D automatisch eine Liste von zu überwachenden Funkverbindungen UF bzw. von so genannten Uplink-Frequenzen, über welche von den Mobilstationen MS Kontakt mit dem Funkkommunikationssystem FS1 bzw. dem ersten Netzelement BS1 aufgenommen wird, abgeleitet werden. Auf diese Weise muss nicht ein komplettes Spektrum, sondern nur die ermittelten Funkverbindungen UF bzw. Uplink-Frequenzen überwacht werden. Zusätzlich kann beim Scannen der Downlink-Frequenzen vom Detektor D z.B. durch Auswertung der BCCH-Information bei einem GSM-Netz auch eine Netzkennung (z.B. Mobile Country Code (MCC), Mobile Network Code (MNC), Ortskennung (LOC)) der vorhandenen Funkkommunikationssystemen FS1 erfasst werden.

Wird vom Detektor D beim Überwachen der Funkverbindungen UF im ersten Verfahrensschritt 1 eine Verbindungsaufnahme der Mobilstation MS zum ersten Netzelement BS1 festgestellt, so wird in einem zweiten Verfahrensschritt 2 das spezielle, zweite Netzelement BS2 sowie der Störsender J aktiviert. Vom Störsender J wird dabei ein breitbandiges Rauschsignal bzw. Jamming-Signal ausgesendet. Durch dieses Rauschsignal geht der Mobilstation MS die Funkverbindung UF bzw. ein entsprechender Träger für die Uplink-Frequenz UF zum ersten Netzelement BS1 verloren. Von der Mobilstation MS wird nur noch eine Verbindung bzw. eine Trägerfrequenz zum zweiten Netzelement BS2 gesehen. Das bedeutet von der Mobilstation MS wird das zweite Netzelement BS2 mit einem deutlich besserem Rauschabstand empfangen als alle anderen in diesem Bereich empfangbaren Netzelemente bzw. Basisstationen, darunter auch das erste Netzelement BS1.

In einem dritten Verfahrensschritt 3 wird von der Mobilstation MS daher Kontakt zum zweiten Netzelement BS2 aufgenommen. D.h. beispielsweise beim GSM-Standard, dass sich die Mobilstation MS z.B. durch ein in den GSM-Normen (04.08) beschriebenes Verfahren in Funkkommunikationssystem FS2 des zweiten Netzelements BS2 einbucht. Dabei wird durch Nachbilden der Netzkennung des ersten Netzelements BS1 im zweiten Netzelement BS2 und Aussenden dieser nachgebildeten Netzkennung sichergestellt, dass sich die Mobilstation MS auf jeden Fall in das vom zweiten Netzelement BS2 emulierte Funkkommunikationssystem FS2 einbuchen will und dort eine Location Updating-Prozedur durchlaufen wird. Die vom zweiten Netzelement BS2 nachgebildete Netzkennung kann dabei z.B. denselben Mobile Country Code (MCC) und denselben Mobile Network Code (MNC), aber eine andere Ortskennung (LOC) wie die Netzkennung des ersten Netzelements BS1 aufweisen. Das bedeutet, das zweite Netzelement BS2 präsentiert sich durch das emulierte Funkkommunikationssystem FS2 und durch die nachgebildete Netzkennung für die Mobilstation MS wie eine neue Basisstation bzw. wie ein Wechsel der Funkzelle im regulären Funkkommunikationssystem FS1.

In einem vierten Verfahrensschritt 4 kann dann beim Durchlaufen der Location Updating-Prozedur eine Identifikation der Mobilstation MS (z.B. IMEI) und/oder eine zur Mobilstation MS zugehörige Teilnehmeridentifikation (z.B. IMSI) abgefragt und in einem Protokoll gespeichert werden. Weiters wird im vierten Verfahrensschritt 4 die Mobilstation MS vom zweiten Netzelement BS2 bzw. von einem am zweiten Netzelement BS2 ablaufenden Verfahren zum netzseitigen Deaktivieren von Mobilstationen MS deaktiviert. Ein derartiges technisches Verfahren wird z.B. in der Schrift EP 1961255 beschrieben.

In einem fünften Verfahrensschritt 5 ist die Mobilstation MS in einem deaktiven Zustand und es werden keine störenden Funkwellen mehr ausgesendet, da von der Mobilstation MS keinen Kontakt mehr zum ersten Netzelement BS1 bzw. zum regulären Funkkommunikationssystem FS1 mehr aufgenommen wird. Erst durch ein Aus- und ein darauffolgendes Einschalten der Mobilstation MS kann die Mobilstation MS wieder aktiviert werden.

In einem sechsten Verfahrensschritt 6 werden dann sowohl das zweite Netzelement BS2 als auch der Störsender J wieder abgeschaltet und können dann für die Deaktivierung der nächsten aktiven Mobilstation eingesetzt werden.

## Patentansprüche

1. Verfahren zum Deaktivieren von Mobilstationen (MS), welche in einem Funkkommunikationssystem (FS1) eingebucht sind, wobei das Funkkommunikationssystem (FS1) zumindest ein erstes Netzelement (BS1) umfasst, welches eine Sende-Empfangseinrichtung für die Mobilstationen (MS) bildet, und wobei ein zweites Netzelement (BS2) vorgesehen ist, welches für ein netzseitiges Deaktivieren von Mobilstationen (MS) eingerichtet ist, wobei Verbindungsaufnahmen der Mobilstationen (MS) zum ersten Netzelement (BS1) überwacht werden (1), dass dann bei einer Verbindungsaufnahme einer der Mobilstationen (MS1) das zweite Netzelement (BS2) sowie ein Störsender (J) aktiviert werden (2), dass durch den Störsender (J) eine Kommunikation dieser Mobilstation (MS) zum zweiten Netzelement (BS2) umgeleitet wird (3), und dass dann diese Mobilstation (MS) vom zweiten Netzelement (BS2) deaktiviert wird (4, 5).

2. Verfahren nach Anspruch 1, wobei für ein Überwachen der Verbindungsaufnahme der Mobilstationen (MS) mit dem Funkkommunikationssystem (FS1) ein Detektor (D) eingesetzt wird.

3. Verfahren nach Anspruch 2, wobei vom Detektor (D) durch Scannen an einem Installationsort vorhandene Funkkommunikationssysteme (FS1) festgestellt werden, und dass daraus eine Liste von zu überwachende Frequenzen (UF) für mögliche Verbindungsaufnahmen der Mobilstationen (MS) abgeleitet wird (1).

4. Verfahren nach einem der Ansprüche 1 bis 3, wobei vom zweiten Netzelement (BS2) eine Netzkennung des ersten Netzelements (BS1) nachgebildet wird (3).

5. Verfahren nach einem der Ansprüche 1 bis 4, wobei vom Störsender (J) ein breitbandiges Rauschsignal derart ausgesendet wird (2), dass von den Mobilstationen (MS) bei der Verbindungsaufnahme nur das zweite Netzelement (BS2) gefunden wird (3).

6. Verfahren nach einem der Ansprüche 1 bis 5, wobei beim Deaktivieren einer der Mobilstationen (MS) eine Identifikation dieser Mobilstation (MS) und/oder eine zugehörige Teilnehmer-Identifikation in einem Protokoll gespeichert werden (4).

7. Verfahren nach einem der Ansprüche 1 bis 6, wobei nach erfolgreicher Deaktivierung einer der Mobilstationen (MS) das zweite Netzelement (BS2) und der Störsender (J) ausgeschaltet werden (6).

8. Verfahren nach einem der Ansprüche 1 bis 7, wobei der Störsender (J) in das zweite Netzelement (BS2) integriert wird.

9. Verfahren nach einem der Ansprüche 1 bis 8, wobei das zweite Netzelement (BS2), der Störsender (J) und der Detektor (D) als vom Funkkommunikationssystem (FS1) unabhängige Komponenten ausgeführt werden.

## Claims

1. Method for deactivating mobile stations (MS) which are registered in a radio communications system (FS1), wherein the radio communications system (FS1) comprises at least one first network element (BS1), which forms a transceiver device for the mobile stations (MS), and wherein a second network element (BS2) is provided which is designed for network-side deactivation of mobile stations (MS), wherein establishment of connections between the mobile stations (MS) and the first network element (BS1) is monitored (1), that the second network element (BS2) and a jammer (J) are then activated (2) in the case of an establishment of a connection for one of the mobile stations (MS1), that communication from this mobile station (MS) to the second network element (BS2) is redirected (3) by way of the jammer (J) and that this mobile station (MS) is then deactivated (4, 5) by the second network element (BS2).

2. Method according to claim 1, wherein a detector (D) is used for monitoring the establishment of connections between the mobile stations (MS) and the radio communications system (FS1).

3. Method according to claim 2, wherein radio communications systems (FS1) present at an installation location are determined by the detector (D) by way of scanning and that a list of frequencies (UF) to be monitored for the possible establishment of connections for the mobile stations (MS) is derived (1) therefrom.

4. Method according to one of claims 1 to 3, wherein a network identifier of the first network element (BS1) is replicated (3) by the second network element (BS2).

5. Method according to one of claims 1 to 4, wherein a broadband noise signal is transmitted (2) by the jammer (J) such that only the second network element (BS2) is discovered (3) by the mobile stations (MS) in the case of the establishment of a connection.

6. Method according to one of claims 1 to 5, wherein in the case of deactivation of one of the mobile stations (MS), an identification of this mobile station (MS) and/or an associated user identification are stored (4) in a log.

7. Method according to one of claims 1 to 6, wherein the second network element (BS2) and the jammer (J) are switched off (6) following successful deactivation of one of the mobile stations (MS).

8. Method according to one of claims 1 to 7, wherein the jammer (J) is integrated into the second network element (BS2).

9. Method according to one of claims 1 to 8, wherein the second network element (BS2), the jammer (J) and the detector (D) are embodied as components which are independent from the radio communications system (FS1).

## Revendications

1. Procédé de désactivation de stations mobiles (MS), lesquelles sont enregistrées dans un système de radiocommunication (FS1), ledit système de radiocommunication (FS1) comprenant au moins un premier élément réseau (BS1), qui forme un dispositif d'émission-réception pour les stations mobiles (MS), et un second élément réseau (BS2) étant prévu, qui est configuré pour la désactivation côté réseau de stations mobiles (MS), procédé dans lequel les établissements de liaison des stations mobiles (MS) avec le premier élément réseau (BS1) sont surveillés (1), puis lors d'un établissement de liaison de l'une des stations mobiles (MS1), le second élément réseau (BS2) ainsi qu'un brouilleur (J) sont activés (2), ledit brouilleur (J) dévie une communication de cette station mobile (MS) vers le second élément réseau (BS2) (3), et puis cette station mobile (MS) est désactivée par le second élément réseau (BS2) (4, 5).

2. Procédé selon la revendication 1, dans lequel un détecteur (D) est utilisé pour surveiller l'établissement de liaison des stations mobiles (MS) avec le système de radiocommunication (FS1).

3. Procédé selon la revendication 2, dans lequel le détecteur (D) identifie, par balayage, les systèmes de radiocommunication (FS1) présents sur un lieu d'installation et en déduit une liste de fréquences à surveiller (UF) pour de possibles établissements de liaison des stations mobiles (MS) (1).

4. Procédé selon l'une des revendications 1 à 3, dans lequel le second élément réseau (BS2) reproduit un identificateur de réseau du premier élément réseau (BS1) (3).

5. Procédé selon l'une des revendications 1 à 4, dans lequel le brouilleur (J) émet (2) un signal de bruit à large bande de telle sorte que lors de l'établissement de liaison, les stations mobiles (MS) ne trouvent (3) que le second élément réseau (BS2).

6. Procédé selon l'une des revendications 1 à 5, dans lequel, en désactivant l'une des stations mobiles (MS), un identificateur de cette station mobile (MS) et/ou un identificateur d'abonné associé sont enregistrés dans un protocole (4).

7. Procédé selon l'une des revendications 1 à 6, dans lequel, après désactivation réussie de l'une des stations mobiles (MS), le second élément réseau (BS) et le brouilleur (J) sont déconnectés (6).

8. Procédé selon l'une des revendications 1 à 7, dans lequel le brouilleur (J) est intégré dans le second élément réseau (BS2).

9. Procédé selon l'une des revendications 1 à 8, dans lequel le second élément réseau (BS2), le brouilleur (J) et le détecteur (D) sont réalisés sous forme de composants indépendants du système de radiocommunication (FS1).
